# EUROPÄISCHE PATENTSCHRIFT

(11) **EP 0 632 557 B1**
(45) Veröffentlichungstag und Bekanntmachung des Hinweises auf die Patenterteilung: **23.07.1997**
(21) Anmeldenummer: 94107712.5
(22) Anmeldetag: 18.05.1994
(51) Int. Cl.: H02G 15/013, H02G 15/192

(54) **Kabelmuffe aus einem geschlitzten Muffenrohr und Stirnseitigen Dichtungskörpern**
Cable sleeve comprising a slit sleeve tube and sealing end bodies
Manchon pour câble constitué d'un tube de manchon fendu et de corps d'étanchéité terminaux

(30) Priorität: 27.05.1993 DE 4317723
(43) Veröffentlichungstag der Anmeldung: 04.01.1995
(73) Patentinhaber: RXS Kabelgarnituren Gesellschaft mit beschränkter Haftung, D-58093 Hagen (DE)
(72) Erfinder: Behrendt, Martin, Dipl.-Ing., D-58093 Hagen (DE); Franz, Adolf, D-58638 Iserlohn (DE); Hunke, Roland, Dipl.-Ing., D-58642 Iserlohn (DE); Röther, Roland, D-58097 Hagen (DE)
(74) Vertreter: Fuchs, Franz-Josef, Dr.-Ing.

(56) Entgegenhaltungen:
- EP-A- 0 403 937
- EP-A- 0 440 903
- EP-A- 0 514 174
- DE-A- 2 557 330
- DE-A- 3 734 873
- FR-A- 2 274 125
- US-A- 3 557 299
- US-A- 4 341 922

## Beschreibung

Die Erfindung betrifft eine Kabelmuffe aus Kunststoff, bestehend aus einem geschlitzten Muffenrohr und stirnseitigen Dichtungskörpern, wobei Einführungsöffnungen in den Dichtungskörpern angeordnet sind, in die ein Dichtungskörpereinsatz in die Einführungsöffnung eines Dichtungskörpers einsetzbar ist und wobei der Dichtungskörpereinsatz seinerseits mindestens eine Einführungsöffnung aufweist, die dem Durchmesser des einzuführenden Kabels anpaßbar ist.

Aus der DE-A- 24 27 677 ist eine derartige Kabelmuffe bekannt, wobei hier die Anpassung der Einführungsöffnungen an die Durchmesser der einzuführenden Kabel jeweils durch Ausschneiden erfolgt. Dies hat zur Folge, daß besondere Schneidewerkzeuge am Einsatzort eingesetzt werden müssen und daß entsprechender Zeitaufwand hierfür nötig ist. Außerdem kommt noch hinzu, daß das Schneidewerkzeug entsprehend gewartet werden muß.

Aus der US-A-4 341 922 ist eine Kabelmuffe aus Kunststoff bekannt, die aus einem geschlitzten Muffenrohr und stirnseitigen Dichtungskörpern besteht, wobei Einführungsöffnungen in den Dichtungskörpern angeordnet sind, in die ein Dichtungskörpereinsatz in die Einführungsöffnung eines Dichtungskörpers einsetzbar ist und wobei der Dichtungskörpereinsatz seinerseits mindestens eine Einführungsöffnung aufweist, die dem Durchmesser des einzuführenden Kabels anpaßbar ist.

In EP-A- 0 403 937 wird eine Kabelmuffe mit einem Dichtungskörper beschrieben, dessen Kabeleinführungsöffnung als Kabeleinführungsstutzen ausgebildet und fest angeformt ist.

Aus der EP-A-0 514 174 ist ein Dichtungskörpereinsatz bekannt, der mehrere Kabeleinführungsöffnungen aufweist.

In der FR-A-2 274 125 wird ein mehrfachgeteilter Dichtungskörper beschrieben, der mehrere, durch Ausschneiden hergestellte Kabeleinführungsöffnungen aufweisen kann.

Aus der EP-A-0 440 903 ist schließlich noch ein Anpassungsdichtelement für den Abschluß einer Einführungsöffnung bei Kabelgarnituren, Rohrzügen oder dergleichen bekannt, bei dem konzentrische, ausreißbare Ringe für die Anpassung an den jeweils erforderlichen Durchmesser der einzuführenden Kabel angeordnet sind.

Für vorliegende Erfindung ergibt sich nun die Aufgabe, eine Kabelmuffe zu schaffen, bei der die Anpassung der Einführungsöffnungen in den stirnseitigen Dichtungskörpern der Kabelmuffe möglichst vereinfacht wird, wobei im Vordergrunde steht, daß keine speziellen Werkzeuge hierfür benötigt werden sollen. Die gestellte Aufgabe wird mit einer Kabelmuffe der eingangs erläuterten Art dadurch gelöst, daß der Dichtungskörpereinsatz als Dichtungskörpereinsatzstutzen, vorzugsweise konisch zuzlaufend, ausgebildet ist.

Der Vorteil an der Erfindung ist in erster Linie darin zu sehen, daß hier eine universelle Kabeleinführung verwendet wird, bei der die Anpassung an die einzuführenden Kabel in einfacher Weise ohne Verwendung von speziellen Vorrichtungen vorgenommen werden kann. So werden hier Dichtungskörpereinsätze mit verschiedenen Einführungsöffnungen verwendet, die entweder in speziell vorgesehenen Öffnungen oder direkt in bereits vorhandene große Einführungsöffnungen der Dichtungskörper eingesetzt werden. Diese Dichtungskörpereinsätze sind in Einführungsrichtung längsgeteilt, so daß sie auch an ungeschnittenen Kabeln einsetzbar sind. Die Abdichtung zum jeweiligen Dichtungskörper bzw. zum eingeführten Kabel erfolgt mit an sich bekannten Dichtungsmassen, die jeweils in die entsprechende Trennebene eingelegt wird. Der Dichtungskörper selbst ist ebenfalls in Einführungsrichtung längsgeteilt, so daß die gesamte stirnseitige Dichtungseinrichtung an ungeschnittenen Kabeln eingesetzt werden kann. Die Dichtungskörpereinsätze besitzen bereits Einführungsöffnungen, die den Durchmessern der einzuführenden Kabel entsprechen, so daß eine weitere Bearbeitung entfällt.

Eine andere bzw. eine zusätzliche Art der Anpassung ist der Durchmesserausgleich mit Dichtungsmassen selbst, die in den Dichtungsspalt zwischen dem Kabel und dem Dichtungskörpereinsatz zum Beispiel eingespritzt wird.

Weiterhin kann der Dichtungskörpereinsatz aus mehreren konzentrischen Ringen bestehen, die je nach gefordertem Durchmesser übereinander eingesetzt werden. Als Zwischenlage dient zur Abdichtung jeweils eine Lage Dichtungsmasse. Diese konzentrischen Ringe können jedoch auch als konzentrische Lamellen ausgebildet sein, die zur Anpassung je nach Bedarf ausgerissen werden können. Damit sind dann zwischen den einzelnen Ringen keine Zwischenlagen aus Dichtungsmasse nötig.

Diese Dichtungskörpereinsätze besitzen in den längsgerichteten Trennebenen korrespondierende Rastelemente, wodurch bei der Montage sofort eine entsprechende Ausrichtung erfolgt.

Zur entsprechenden Anpassung können auch konisch zulaufende Dichtungskörperstutzen in den Dichtungskörper eingesetzt werden, wobei durch den konischen Verlauf zusätzlich eine Anpassungsmöglichkeit durch simples Abschneiden gegeben ist. Als dichtender Abschluß dient hier dann vorzugsweise ein Schrumpfschlauch.

Für Verteilermuffen bietet sich gemäß der Erfindung an, daß die Dichtungskörpereinsätze an einem Ende mehrere Auslässe, zum Beispiel in Form von Einführungsstutzen, aufweisen, wobei das andere Ende in der Einführungsöffnung des Dichtungskörpers dichtend eingesetzt wird.

Die Erfindung wird nun anhand von Ausführungsbeispielen in zwölf Figuren näher erläutert.
- Figur 1: zeigt eine Kabelmuffe mit einem stirnseitigen Dichtungskörper, in dem ein Dichtungskörpereinsatz mit Einführungsöffnungen eingesetzt ist.
- Figur 2: zeigt ein einzuführendes Kabel mit einem tungsbandwickel.
- Figur 3: zeigt einen Dichtungskörpereinsatz mit überstehenden Randkanten.
- Figur 4: zeigt einen Dichtungskörpereinsatz mit einer Dichtungsmasse zwischen dem Dichtungskörpereinsatz und dem eingeführten Kabel.
- Figur 5: zeigt einen Dichtungskörpereinsatz aus konzentrischen Ringen.
- Figur 6: zeigt Rastelemente in den Trennebenen der Dichtungskörpereinsätze.
- Figur 7: zeigt die Ausbildung der Trennebene eines Dichtungskörpereinsatzes in Mäanderform.
- Figur 8: zeigt die Ausbildung der Trennebene eines Dichtungskörpereinsatzes in Trapezform.
- Figur 9: zeigt einen Dichtungskörpereinsatz, der als konisch zulaufender Einführungsstutzen ausgebildet ist.
- Figur 10: zeigt einen Dichtungskörpereinsatz aus zusammenhängenden, austrennbaren konzentrischen Ringen.
- Figur 11: zeigt einen Dichtungskörpereinsatz mit mehreren Einführungsstutzen in Seitenansicht.
- Figur 12: zeigt die Ausführung nach Figur 11 in Frontansicht.

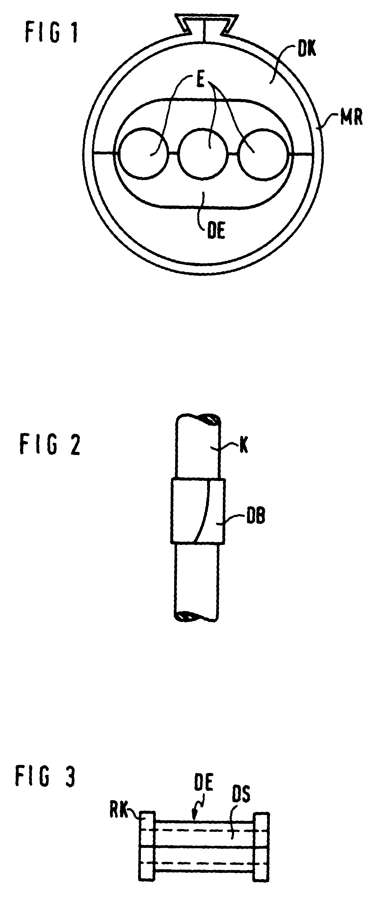

Figur 1 zeigt eine Kabelmuffe gemäß der Erfindung, die aus einem Muffenrohr MR und stirnseitigen Dichtungskörpern DK besteht. Die Dichtungskörper haben als Einführungsbereiche Dichtungskörpereinsätze DE, die nach Bedarf in den entsprechenden Einführungsöffnungen E der Dichtungskörper DK eingesetzt werden können. Die Abdichtung zwischen den Dichtungskörpereinsätzen DE und den Dichtungskörpern DK erfolgt mit Hilfe von Dichtungsmaterial in an sich bekannter Weise. Die Dichtungskörper DK wie auch die Dichtungskörpereinsätze DE sind vorzugsweise in Einführungsrichtung längsgeso daß sie auch über ungeschnittene Kabel aufgesetzt werden können.

In Figur 2 wird erläutert, daß die Abdichtung zwischen dem jeweils eingeführten Kabel K und dem Dichtungskörpereinsatz DE mit Hilfe eines aus Dichtungsmaterial bestehenden Dichtungsbandwickels DB erfolgen kann. Das Dichtungsmaterial besteht aus den bisher üblichen plastischen oder elastischen Kunststoffmaterialien.

Figur 3 zeigt die Ausführung eines Dichtungskörpereinsatzes DE in Form eines zylindrischen Dichtungsstopfens DS, der in eine Öffnung des Dichtungskörpers DK als Anpassungselement eingesetzt wird, wobei an den beiden Enden nach auswärts überstehende Randkanten RK von beiden Seiten einen Anschlag bilden, so daß der Dichtungsstopfen DS in der Öffnung in Längsrichtung fixiert ist.

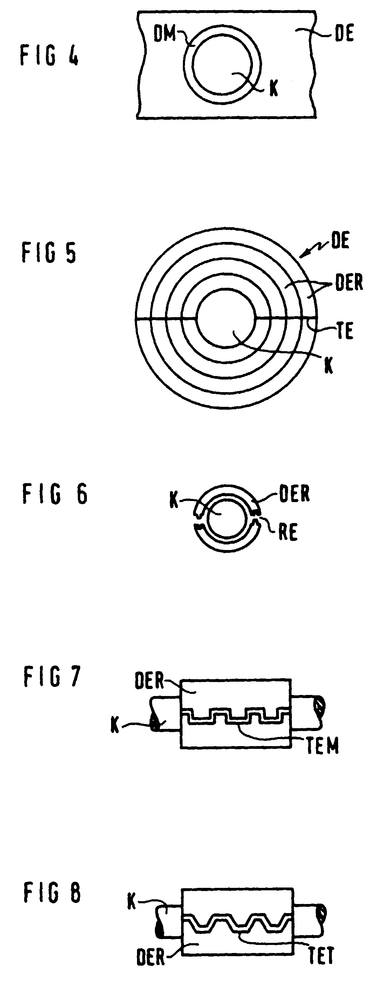

Figur 4 vermittelt ein Ausführungsbeispiel, bei dem die Abdichtung zum Dichtungskörpereinsatz DE mittels eines einspritzbaren Dichtungsmittels DM, zum Beispiel aus einer Kartusche, erfolgt.

Die Figur 5 verdeutlicht ein Ausführungsbeispiel, bei dem der Dichtungskörpereinsatz DE aus einer Vielzahl von konzentrischen Dichtungskörpereinsatzringen DER gebildet wird, wobei die Abdichtung zwischen den einzelnen Dichtungskörpereinsatzringen DER wiederum mit einem an sich bekannten Dichtungsmittel erfolgt. Die Dichtungskörpereinsatzringe sind vorzugsweise als Halbringe ausgebildet und werden in Längsrichtung in der Trennebene TE ebenfalls mit Dichtungsmitteln versehen.

Figur 6 verdeutlicht, daß bei dem Ausführungsbeispiel nach Figur 5 in den Trennebenen der Dichtungskörpereinsatzringe DER Rastelemente RE, zum Beispiel in Form von Nut und Feder, verwendet werden, die beim Zusammenstellen des Dichtungskörpereinsatzes DE eine seitliche Fixierung ergeben.

Die Figur 7 zeigt, daß die Dichtungskörpereinsatzringe DER auch in Längsrichtung mit Hilfe von Rastelementen in der Trennebene, die hier als korrespondierende Mäanderausschnitte TEM ausgebildet sind, ebenfalls eine Fixierung bzw. Ausrichtung erhalten.

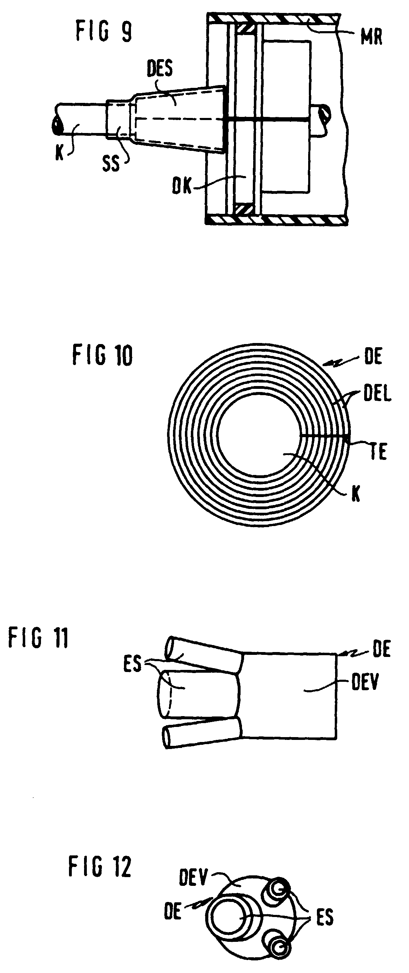

Figur 8 zeigt Rastelemente für Dichtungskörpereinsatzringe DER in der längsgerichteten Trennebene, die in Trapezform TET ausgebildet sind.

Figur 9 zeigt eine Kabelmuffe mit einem Muffenrohr MR und einem Dichtungskörper DK, in dem zur Anpassung an das Kabel KA ein konischer Dichtungskörpereinsatzstutzen DES eingesetzt ist. Dieser Dichtungskörpereinsatzstutzen DES ist zweckmäßigerweise mit einem Schrumpfschlauch SS versehen, mit dem die Abdichtung zum Kabel K vorgenommen wird.

Die Figur 10 zeigt einen Dichtungskörpereinsatz DE, der aus zusammenhängenden konzentrischen Lamellen DEL besteht. Diese Lamellen können je nach Bedarf ausgerissen werden, so daß dadurch die Einführungsöffnung dem Durchmesser des einzuführenden Kabels K angepaßt wird. Die Abdichtung zwischen dem Dichtungskörper und dem Dichtungskörpereinsatz erfolgt, wie oben bereits beschrieben wurde, mit den an sich bekannten Mitteln. Dieser Dichtungskörpereinsatz DE ist zusätzlich in Einführungsrichtung mindestens einfach in einer Trennebene TE geteilt, so daß er auch an ungeschnittenen Kabeln verwendet werden kann.

In Figur 11 wird ein Dichtungskörpereinsatz DE beschrieben, der mit einem Verzweigerelement versehen ist. Er besteht aus dem eigentlichen Einsatzstück DEV, das in den Dichtungskörper DK eingesetzt wird. Am anderen Ende sind Einführungsstutzen ES, zum Beispiel mit verschiedenen Durchmessern, angeformt, so daß hiermit mehrere Kabel mit verschiedenen Duchmessern eingeführt werden können. Diese angeformten Einführungsstutzen ES sind zum Beispiel aus schrumpfbarem Material oder mit einem Schrumpfschlauch überzogen und können dann auf die eingeführten Kabel dicht aufgeschrumpft werden.

Die Figur 12 zeigt das Ausführungsbeispiel nach Figur 11 in einer Frontansicht, wobei hieraus die Anordnung der Einführungsstutzen ES am eigentlichen Dichtungskörpereinsatzstück DEV besonders deutlich wird.

## Patentansprüche

1. Kabelmuffe aus Kunststoff, bestehend aus einem geschlitzten Muffenrohr (MR) und stirnseitigen Dichtungskörpern (DK), wobei Einführungsöffnungen in den Dichtungskörpern (DK) angeordnet sind, in die ein Dichtungskörpereinsatz (DE) in die Einführungsöffnung eines Dichtungskörpers (DK) einsetzbar ist und wobei der Dichtungskörpereinsatz (DE) seinerseits mindestens eine Einführungsöffnung (E) aufweist, die dem Durchmesser des einzuführenden Kabels (K) anpaßbar ist,
**dadurch gekennzeichnet,**
daß der Dichtungskörpereinsatz (DE) als Dichtungskörpereinsatzstutzen (DKS), vorzugsweise konisch zulaufend, ausgebildet ist.

2. Kabelmuffe nach Anspruch 1,
**dadurch gekennzeichnet,**
daß am freien Ende des Dichtungskörpereinsatzstutzens (DKS) ein Schrumpfschlauch (SS) angesetzt ist.

3. Kabelmuffe nach Anspruch 1,
**dadurch gekennzeichnet,**
daß der Dichtungskörpereinsatz (DE) mehrere Einführungsöffnungen (E) aufweist.

4. Kabelmuffe nach Anspruch 1,
**dadurch gekennzeichnet,**
daß der Dichtungskörpereinsatz (DE) als Verteilereinsatzstück (DEV) ausgebildet ist und mehrere Einführungsstutzen (ES) aufweist.

5. Kabelmuffe nach einem der vorhergehenden Ansprüche,
**dadurch gekennzeichnet,**
daß der Dichtungskörpereinsatz (DE) in Einführungsrichtung mindestens einfach längsgeteilt ist.

6. Kabelmuffe nach Anspruch 5,
**dadurch gekennzeichnet,**
daß in den Trennebenen (TE) der Dichtungskörpereinsätze (DE) Rastelemente (RE) angeordnet sind, vorzugsweise in Form einer Nut- und Federführung.

7. Kabelmuffe nach Anspruch 5 oder 6,
**dadurch gekennzeichnet,**
daß in der Trennebene (TE) in Längsrichtung Rastelemente angeordnet sind.

8. Kabelmuffe nach Anspruch 7,
**dadurch gekennzeichnet,**
daß die Rastelemente in Mäanderform (TEM) ausgebildet sind.

9. Kabelmuffe nach Anspruch 7,
**dadurch gekennzeichnet,**
daß die Rastelemente in Trapezform (TET) ausgeführt sind.

10. Kabelmuffe nach einem der vorhergehenden Ansprüche,
**dadurch gekennzeichnet,**
daß in quer- und längsverlaufenden Trennebenen (TE, TET, TEM), sowie zwischen den einzelnen Ringflächen an sich bekanntes Dichtungsmaterial eingesetzt ist.

11. Kabelmuffe nach Anspruch 10,
**dadurch gekennzeichnet,**
daß das Dichtungsmaterial aus elastischem Material besteht.

12. Kabelmuffe nach Anspruch 10,
**dadurch gekennzeichnet,**
daß das Dichtungsmaterial aus plastischem Material besteht.

13. Kabelmuffe nach einem der vorhergehenden Ansprüche,
**dadurch gekennzeichnet,**
daß der Dichtungskörpereinsatz (DE) aus einem plastischen oder elastischen Material besteht.

14. Kabelmuffe nach einem der Ansprüche 1 bis 13,
**dadurch gekennzeichnet,**
daß der Dichtungskörpereinsatz (DE) aus spritzbarem Kunststoffmaterial besteht.

15. Kabelmuffe nach einem der vorhergehenden Ansprüche,
**dadurch gekennzeichnet,**
daß Dichtungsmaterial im Ringspalt zwischen dem einzuführenden Kabel (K) und dem Dichtungskörpereinsatz (DE) eingebracht ist.

## Claims

1. Cable sleeve made from plastic and comprising a slit sleeve tube (MR) and end-face sealing members (DK), there being arranged in the sealing members (DK) inlet openings into which a sealing member insert (DE) can be inserted, and it being the case that the sealing member insert (DE) for its part has at least one inlet opening (E) which can be adapted to the diameter of the cable (K) to be inserted, characterized in that the sealing member insert (DE) is constructed, preferably in a conically converging fashion, as a sealing member insert stub (DES).

2. Cable sleeve according to Claim 1, characterized in that a shrink hose (SS) is attached to the free end of the sealing member insert stub (DES).

3. Cable sleeve according to Claim 1, characterized in that the sealing member insert (DE) has a plurality of inlet openings (E).

4. Cable sleeve according to Claim 1, characterized in that the sealing member insert (DE) is constructed as a distributor insert piece (DEV) and has a plurality of inlet stubs (ES).

5. Cable sleeve according to one of the preceding claims, characterized in that the sealing member insert (DE) is longitudinally split at least once in the insertion direction.

6. Cable sleeve according to Claim 5, characterized in that latching elements (RE) are arranged, preferably in the form of a slot-and-key guide, in the parting planes (TE) of the sealing member inserts (DE).

7. Cable sleeve according to Claim 5 or 6, characterized in that latching elements are arranged in the longitudinal direction in the parting plane (TE).

8. Cable sleeve according to Claim 7, characterized in that the latching elements are constructed in a meandering shape (TEN).

9. Cable sleeve according to Claim 7, characterized in that the latching elements are designed in the shape of trapeziums (TET).

10. Cable sleeve according to one of the preceding claims, characterized in that sealing material known per se is inserted in transversely and longitudinally extending parting planes (TE, TET, TEM) as well as between the individual annular surfaces.

11. Cable sleeve according to Claim 10, characterized in that the sealing material consists of elastic material.

12. Cable sleeve according to Claim 10, characterized in that the sealing material consists of plastic material.

13. Cable sleeve according to one of the preceding claims, characterized in that the sealing member insert (DE) consists of a plastic or elastic material.

14. Cable sleeve according to one of Claims 1 to 13, characterized in that the sealing member insert (DE) consists of injectable plastic material.

15. Cable sleeve according to one of the preceding claims, characterized in that sealing material is introduced in the annular gap between the cable (K) to be inserted and the sealing member insert (DE).

## Revendications

1. Manchon de câbles en matière plastique, qui est constitué d'un tube (MR) de manchon fendu et d'éléments (DK) d'étanchéité frontaux, des ouvertures d'introduction étant ménagées dans les éléments (DK) d'étanchéité, et dans lequel un insert (DE) d'élément d'étanchéité peut être introduit dans l'ouverture d'étanchéité d'un élément (DK) d'étanchéité, et l'insert (DE) d'élément d'étanchéité comportant pour sa part au moins une ouverture (E) d'introduction qui peut être adaptée au diamètre du câble (K) à introduire, caractérisé en ce que l'insert (DE) d'élément d'étanchéité est réalisé en embout (DKS) d'insert d'élément d'étanchéité, de préférence en se terminant en cône.

2. Manchon de câbles suivant la revendication 1, caractérisé en ce qu'un tuyau (SS) souple rétractable est rattaché à l'extrémité libre de l'embout (DKS) d'insert d'élément d'étanchéité.

3. Manchon de câbles suivant la revendication 1, caractérisé en ce que l'insert (DE) d'élément d'étanchéité comporte plusieurs ouvertures (E) d'introduction.

4. Manchon de câbles suivant la revendication 1, caractérisé en ce que l'insert (DE) d'élément d'étanchéité est réalisé en pièce (DEV) à insérer de répartition et comporte plusieurs ouvertures (ES) d'introduction.

5. Manchon de câbles suivant l'une des revendications précédentes, caractérisé en ce que l'insert (DE) d'élément d'étanchéité est fendu longitudinalement au moins une fois dans la direction d'introduction.

6. Manchon de câbles suivant la revendication 5, caractérisé en ce qu'il est prévu dans les plans (TE) de joint des inserts (DE) d'élément d'étanchéité des éléments (RE) d'encliquetage, de préférence en forme d'une liaison à tenon et mortaise.

7. Manchon de câbles suivant la revendication 5 ou 6, caractérisé en ce qu'il est prévu des éléments d'encliquetage dans les plans (TE) de joint, dans la direction longitudinale.

8. Manchon de câbles suivant la revendication 7, caractérisé en ce que les éléments d'encliquetage sont réalisés suivant une forme sinueuse (TEM).

9. Manchon de câbles suivant la revendication 7, caractérisé en ce que les éléments d'encliquetage sont réalisés suivant une forme trapézoïdale.

10. Manchon de câbles suivant l'une des revendications précédentes. caractérisé en ce qu'il est introduit un matériau d'étanchéité connu en soi dans les plans (TE, TET, TEM) de joint s'étendant transversalement et longitudinalement, ainsi qu'entre les surfaces annulaires individuelles.

11. Manchon de câbles suivant la revendication 10, caractérisé en ce que le matériau d'étanchéité est un matériau élastique.

12. Manchon de câbles suivant la revendication 10, caractérisé en ce que le matériau d'étanchéité est un matériau plastique.

13. Manchon de câbles suivant l'une des revendications précédentes, caractérisé en ce que l'insert (DE) d'élément d'étanchéité est en un matériau plastique ou élastique.

14. Manchon de câbles suivant l'une des revendications 1 à 13, caractérisé en ce que l'insert (DE) d'élément d'étanchéité est en une matière plastique pouvant être moulée par injection.

15. Manchon de câbles suivant l'une des revendications précédentes, caractérisé en ce qu'il est introduit du matériau d'étanchéité dans l'intervalle annulaire compris entre le câble (K) à introduire et l'insert (DE) d'élément d'étanchéité.
